# EUROPEAN PATENT SPECIFICATION

(11) **EP 3 998 192 B1**
(45) Date of publication and mention of the grant of the patent: **20.03.2024**
(21) Application number: 21158246.5
(22) Date of filing: 19.02.2021
(51) Int. Cl.: B64C 1/26, B64C 3/18

(54) **WING SPAR STRUCTURE**
FLÜGELHOLMSTRUKTUR
STRUCTURE DE LONGERON D'AILE

(43) Date of publication of application: 18.05.2022
(73) Proprietor: Lilium eAircraft GmbH, 82234 Wessling (DE)
(72) Inventor: MÖBIUS, Andreas, 81667 München (DE); BOHR, Tim, 82234 Wessling (DE)
(74) Representative: Weickmann & Weickmann PartmbB

(56) References cited:
- FR-A- 543 443
- FR-A1- 2 576 279
- GB-A- 1 348 826
- GB-A- 2 435 457
- JP-A- 2008 114 707
- RU-C1- 2 481 243
- US-A- 3 159 228
- US-A- 3 519 228
- US-A- 4 535 958
- US-A1- 2011 215 202

## Description

The invention relates to a wing spar structure for an aircraft and an aircraft comprising such a wing spar structure.

The absorption of loads introduced into an aircraft through the wings is a major challenge in the construction of aircraft. In particular, bending moments applied to a wing during flight need to be transferred to the fuselage or to the other wing in a defined and reliable manner to ensure structural integrity of the aircraft in all conceivable circumstances and weather conditions.

Larger aircraft typically pass the bending moment introduced by the wings into a wingbox, which is an integral part of the fuselage. The wingbox thus takes and transfers the wing bending loads. Such a wing box has a high structural integrity, but is one of the heaviest components of the aircraft. Smaller aircraft are usually constructed without a wing box by directly connecting the main spars of the left and right wings to one another. In such spar-to-spar connection, the bending moments from a load along the vertical Z-axis (leading to a moment about the longitudinal X-axis) are transferred through a force couple in lateral y-direction. This is typically realized through a prolonged slot-and-key connection with bolts along the X-axis, or through a box-beam connection in which one spar fits into a pocked of the other wing, usually achieved with a slot-and-key combination as well. If the design space allows it, a through-beam is the most lightweight solution but comes at manufacturing, logistics, and assembly constraints. This conventional spar to spar connection tends to have significant shear forces building up in the main spar section within the fuselage, even after the shear forces (from lift, for example) have been transferred to the fuselage, usually by shear pins in the wing root. This is due to the force couple of y-forces.

For further prior art, reference is made to the generic JP 2008-114707 A and to US 2011/021502 A1 and US 4 535 958 A.

In the view of the above, it is an object of the present invention to provide a wing spar structure which allows to transfer bending moments between the wings without the use of a wing box, wherein the structure has a low weight, a high structural integrity, improved load distribution as well as advantages in assembly and maintenance.

According to a first aspect of the present invention, this object is achieved by a wing spar structure according to claim 1, in which a left spar is connected to the right spar by directly connecting the spar cap of the left wing to the spar cap of the right wing at a spar connection portion. As a result, bending moments are transmitted directly from one spar cap to the other spar cap while the shear web within the fuselage is not used to transfer the main bending moment. This allows saving material, which leads to a lightweight construction. Neither a continuous spar nor a heavy wing box is necessary, such that logistics become significantly easier, and manufacturing, assembly and maintenance are simplified as well.

To provide a sound, yet easy to assemble connection between the spars, the spar cap of the left spar and the spar cap of the right spar are connected via a bolt connection. A material with higher structural strength can be used for the bolts, whereas the spars may be designed with a lower structural strength. As a consequence, the weight of the wing spar structure is reduced. Bolts may be threaded to engage with a corresponding counter thread in one of the spar caps or with a threaded nut. Alternatively, press-fitted bolts or positively-locking form fitted bolts may be used.

Further, at least one bolt may be mounted such as to extend in a direction substantially parallel to the web portion. According to this embodiment, direct forces may be efficiently transferred between the cap portions through a positive-locking fit via the bolts. In order to improve further the transfer of bending moments, the bolt connection may comprise a plurality of bolts, preferably arranged in a symmetrical pattern to a vertical median plane of the right spar and/or the left spar such as to achieve symmetric fastening forces.

According to the invention, each of the left and right spars has at least one spar cap. In a cross-section orthogonal to the longitudinal axis of the spars, the web portion extends in a vertical direction of the aircraft. One upper spar cap may be provided at an upper portion of the web portion such as to extend orthogonally to the web portion in cross-section. Alternatively two or more upper spar caps may be provided at the upper portion of the web portion, which both extend in parallel to one another and orthogonally to the web portion. Especially, the plurality of upper spar caps may be aligned in vertical direction, such as to be laminated on top of one another, or they may be aligned in horizontal direction (with equal vertical positions) such as to extend side-by-side. The upper spar caps may be glued or otherwise bonded together at their mating surfaces (in the case of vertical stacking) and/or at their adjacent longitudinal edges. By providing a plurality of upper spar caps, structural redundancy is achieved to further improve reliability and strength of the wing spar structure.

Alternatively or in addition to the at least one upper spar cap, one or more lower spar caps may be provided at a lower portion of the web portion such as to extend orthogonally to the web portion in cross-section. If two or more lower spar caps are provided, they may be configured as described above for the upper spar caps. If a spar has both upper and lower spar caps, a symmetric I-shape or double-T-shape can be implemented to take bending moments most efficiently.

The wing spar structure further comprises at least one shear pin adapted to be fixed to a fuselage of the aircraft such as to transmit shear forces from the wing to the fuselage, said shear pin preferably being fixed to a wing root portion or a root rib attached to the left spar or the right spar. Shear pins allow to absorb shear forces originating from lift, for example, by transmitting the shear forces into the fuselage. Therefore, portions of the spars in a region within the fuselage receive lower or even no shear forces.

To ensure a complete transfer of forces at the connection between the wings and the fuselage, the main spar web may have an additional fuselage attachment point, such that forces are transmitted from the wing to the fuselage through the shear pin and through the additional fuselage attachment point. In a preferred embodiment of the invention, two shear pins are associated to each wing, wherein one of the two shear pins is provided at a leading edge of the wing and the other one of the two shear pins is provided close to the trailing edge of the wing. In this way, torsion of the wing around the lateral axis as well as a moment around the vertical axis, such as from thrust in cruise-flight, for example, may efficiently and reliably be absorbed by the fuselage.

According to another embodiment of the invention, in at least one of the left spar and the right spar, a thickness of a portion of the spar cap adjacent to the spar connection portion may be larger, preferably more than 1.5 times larger, than a thickness of a portion of the spar cap at a distance from the spar connection portion. Therefore, the structural strength of the spar connection portion is enhanced to compensate for any material weakening due to the connection mean, such as through holes for receiving the bolts. Therefore, the weight of the wing spar structure may be reduced. For example, the increase of the thickness towards the spar connection portion may be formed as a linear shape, in steps or as a curve.

In a further embodiment of the invention, the spar caps of the right and the left wings may be connected at the connection portion in an overlapping manner. In particular, the spar cap of the right spar or the spar cap of the left spar may be formed in an U-shape (or fork shape) for receiving the spar cap of the respective other spar. In this manner, additional stabilization of the spars be mutual positive-locking fit may be achieved.

Instead of a U-shaped configuration, the spar connection portion may be formed by a loop connection, which comprises a loop provided on at least one of the spars and a loop engaging structure, for example a pin or a bolt, arranged to pass through the loop. A simple loop connection is realized by a through hole within the spar cap of one of the spars and a loop engaging structure, for example a pin or a bolt, provided at the spar cap of the other one of the spars, such that the loop engaging structure engages with the loop. In another embodiment, a loop connection can be constructed without weakening the material. In particular, if the left and right spars are formed from a fiber material, fibers of the fiber material may extend in a loop shape at the spar connection portion around a central pin such as to form the loop.

In a further embodiment of the present invention, the web portion of the left spar and the web portion of the right spar have recesses arranges at their ends facing one another such as to jointly form a through hole. This through-hole may allow a cabin or cargo space to be arranged within the fuselage a position intersecting the spars, and saves weight.

For an additional weight reduction, the web portion may be provided with light weight construction measures, preferably a recess portion without material. As according to the invention bending moments are transferred by the spar caps, the web portion receives only small or even no bending moments or shear forces. As a consequence, the web portions have primarily a supporting function for the spar caps, and therefore light weight construction measures may be provided without impairing the overall structural integrity of the spars.

In another embodiment of the invention, the wing spar structure may further comprise a second right spar and a second left spar, wherein the second right and left spars are connected to one another by connecting a spar cap of the left spar to a spar cap of the right spar at a second spar connection portion. In this manner, the efficient spar connection according to the present invention may be applied to other spars of the wing structure to achieve the same effects.

According to a further embodiment of the invention, the spar cap of the left spar may be connected to the spar cap of the right spar in a fuselage region of the aircraft at the spar connection portion and wherein a height of the web portion in vertical direction may increase towards the spar connection portion. By increasing the height of the web portion, the direct forces (from the main bending moment) within the spar caps are greatly reduced within the fuselage of the aircraft and most importantly at a connection portion between the spars such as to enhance lightweight load transfer.

According to a second aspect of the invention, the above-mentioned object is achieved by an aircraft comprising a wing spar structure according to any embodiment of the first aspect. For the reasons set out above with respect to the first aspect of the invention, an aircraft of the second aspect of the invention has a lightweight construction with a high structural strength, in particular in view of the direct transfer of bending moments between the spar caps of the left and right spars.

It is to be noted that in all aspects and embodiments of the invention, the spars may be made of composite material, preferably fiber-reinforced material, most preferably carbon fiber reinforced material or glass fiber reinforced material. Further, it is to be emphasized that a wing may be any kind of airfoil, e.g. a conventional wing, a canard or the like. The invention may be adapted to any kinds of aircraft, including manned and unmanned aircraft, passenger and freight carriers.

The invention will further be described in more detail with respect to specific embodiments referring to the enclosed drawings, in which:
- Figure 1: shows a schematic layout of an aircraft equipped with a wing spar structure according to the present invention.
- Figures 2a to 2c: show cross sectional views of a wing spar structure according to the prior art (Figure 2a), according to a first embodiment of the invention (Figure 2b) and according to another embodiment of the invention (Figure 2c).
- Figure 3: shows an cross sectional view of a spar along the line III-III in Figure 2b.
- Figure 4: shows a plan view of a spar connection portion.
- Figures 5a and 5b: show different variants of the spar connection portion in a cross sectional view (Figure 5a) and in a plan view (Figure 5b).
- Figures 6a to 6c: show a cross sectional view and plan views of further variants and embodiments of the spar connection portion.

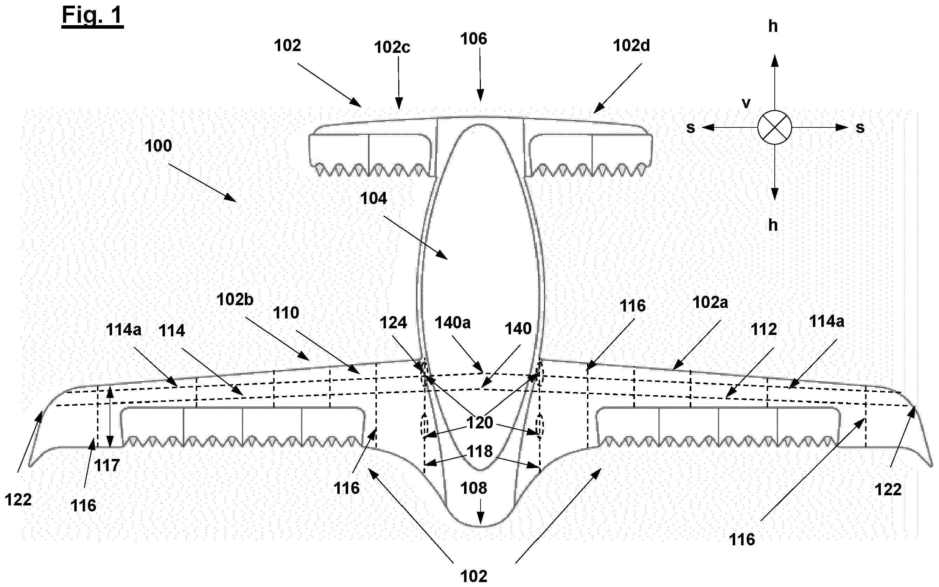

In Figure 1, an aircraft is generally denoted by reference numeral 100. The aircraft 100 comprises wings 102 and a fuselage 104. The aircraft 100 elongates from a front portion 106 to a rear portion 108 in a horizontal direction h (X-axis or longitudinal axis), which is equivalent to a heading direction h. The wings 102 protrude, viewed from the rear 108 to the front 106, in a lateral direction s towards left and right, respectively.

As an example, the aircraft 100 comprises a right wing 102a and a left wing 102b arranged at the rear 108. At the front 106, a right canard 102c and a left canard 102d are arranged. Both the wings 102a, 102b and the canards 102c, 102d may be equipped with a wing spar structure 110. For reasons of simplicity a wing spar structure 110 is shown for the right wing 102a and the left wing 102b only. This is indicated by dashed lines. It is obvious for those skilled in the art, that the wing spar structure 110 may be adapted to any other type of wing, e.g. canard 102c, 102d. It is also to be emphasized that the invention is not limited to this embodiment. For example, the aircraft 100 may have a standard configuration with a wing and a tailplane, or a blended wing body configuration.

The wing spar structure 110 comprises a right spar 112 and a left spar 114 associated to the right wing 102a and the left wing 102b, respectively, in a well know manner. Substantially orthogonal to the spar 112, 114 a plurality of ribs 116 protrude from the spar 112, 114, adjusted to a width 117 of the wing 102a, 102b. Adjacent to the fuselage 104, a root rib 118 is arranged. The root rib 118 is mounted to the fuselage 104 with at least one shear pin 120. The shear pin 120 is adapted to transfer shear forces from the spar 112, 114 into the fuselage 104.

The spars 112, 114 have substantially the same length in the lateral direction s as the wing from a peripheral portion 122 to a fuselage region 124. The length of the right wing 102a and the left wing 102b and a lateral size of the fuselage 104 form a wingspan. The wingspan may be more than 10 meter.

Further, the right spar 112 and the left spar 114 are connected at a spar connection portion 140. The wings spar structure 110 may further comprise a second right spar 112a and a second left spar 114a, connected by connecting a spar cap 32 (not shown) of the left wing 102b to a spar cap 32 (not shown) of the right wing 102a at a second spar connection portion 140a.

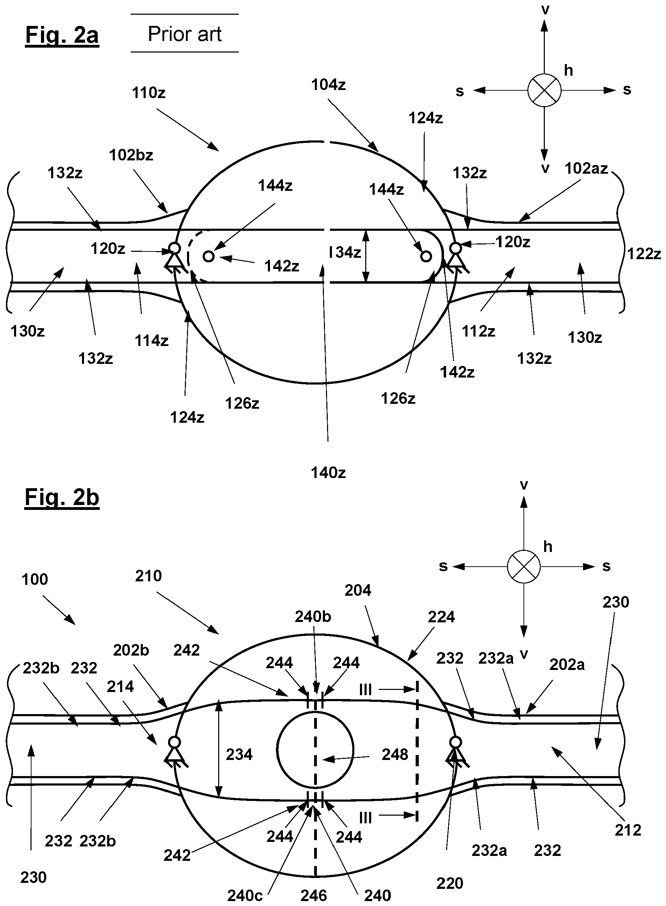

Figure 2a shows a wing spar structure 110z according to the prior art in a cross sectional view from a front towards a rear of an aircraft. Analogous parts are provided with the same reference numerals as in Figure 1, but followed with a z.

The wing spar structure 110z comprises a right spar 112z associated to a right wing 102az and a left spar 114z associated to a left wing 102bz. The right wing 112z and the left wing 114z are mounted to the fuselage 104z in a fuselage region 124z. Each spar 112z, 114z projects into the fuselage portion and ends with a spar end portion 126z within the fuselage region 124z. At a root portion of each spar 112z, 114z, a shear pin 120z is provided, which is fixed to the fuselage 104z such as to transmit shear forces from the wing to the fuselage 104z.

Each spar 112z, 114z has a web portion 130z extending in a substantial vertical direction v, which is orthogonal to the horizontal direction h and the lateral direction s. On each end of the web portion, a spar cap 132z is provided.

A height 134z of the web portion 130z of the spars 112z, 114z is substantially constant from a peripheral portion 122z to a spar connection portion 140z within the fuselage 104z. At a spar connection portion 140z, the right spar 112z and the left spar 114z are connected in an overlapping manner. According to this example, the web portion 130z of right spar 112z is overlapped by the web portion 130z of the left spar 114z, which is indicated by a dashed line. At each spar end portion 126z, the web portion 130z of the right spar 112z and web portions 130z of the left spar 114z are connected with a bolt connection 142z via a bolt 144z extending in horizontal direction h.

In contrast to the prior art, an embodiment of a wing spar structure 210 according to the invention is shown in Figure 2b. Analogous parts are provided with the same reference numerals as in Figure 1 and Figure 2a but increased by 100 and without the following z.

The wing spar structure 210 comprises a left wing 202a and a right wing 202b. To the left wing 202a a left spar 214 and to the right wing 202b a right spar 212 is associated. Each spar 212, 214 has a web portion 230 and at least one spar cap 232 extending substantially orthogonal from the web portion 230 in horizontal direction h.

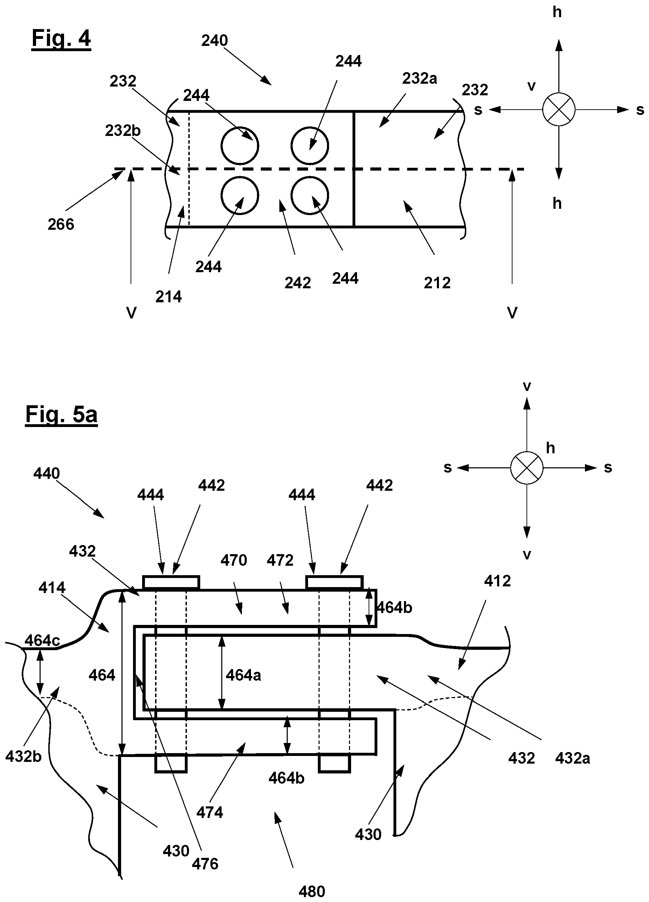

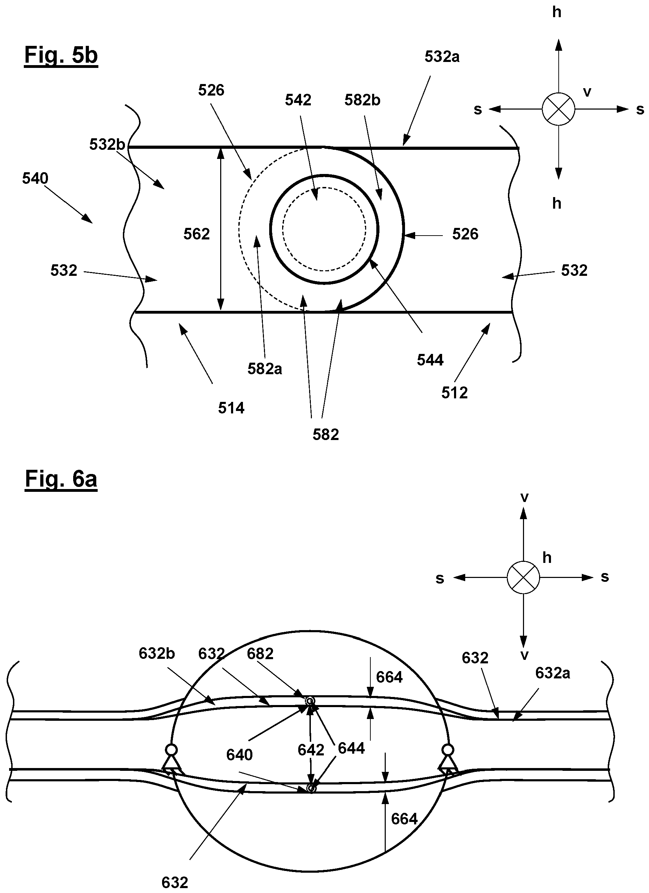

Within a fuselage region 224, a spar cap 232a of the right spar 212 and a spar cap 232b of the left spar 214 are connected at a spar connection portion 240 via bolt connection 242. For receiving a bolt 244, the right spar cap 232a and the left spar cap 232b are provided with a hole, e.g., drilled or formed with split layers. At the bolt connection 242, the bolt 244 may be a bolt secured with a spring at its end, a screw-nut connection, a press fitted bolt, a friction welding bolt, a bolt-in-bolt connection, a pin-in-pin connection or the like. In case of a screw-nut connection, the spar caps 232a, 232b are provided with an internal thread and the bolt 244 is provided with an external thread. Variants of such bolt connection 242 according to the present invention will by described further below with reference to the Figures 4, 5a and 5b.

Additionally, a height 234 of the web portion 230 increases towards the spar connection portion 240. Within the web portion 230 on a vertical axis 246 with the spar connection portion 240, a through-hole portion 248, for reducing weight, is provided, which may for example be formed by recesses provided in the web portions 230 of the left and right spars, respectively, such as to face on another.

At a root portion of each spar 212, 214, for example at a root rib (not shown) attached to the root portion of each spar 212, 214, a shear pin 220 is preferably provided, which is fixed to the fuselage 204 such as to transmit shear forces from the wing to the fuselage 104. Preferably, two shear pins are associated to each wing, wherein one of the two shear pins is provided at a leading edge of the wing and the other one of the two shear pins is provided at the trailing edge of the wing.

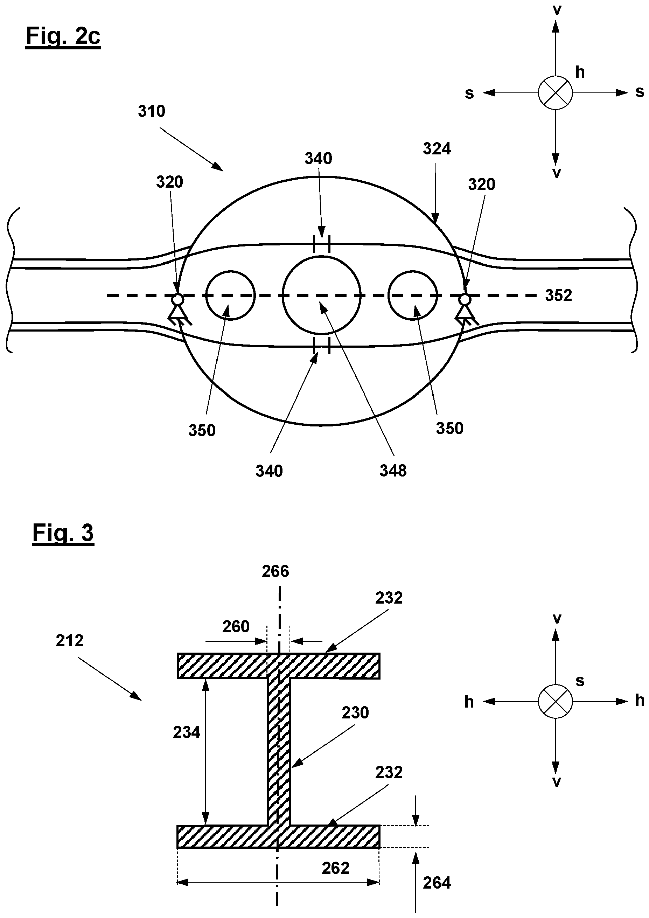

According to another embodiment, a wing spar structure 310 (Figure 2c) is provided with additional light weight construction measures 350 formed by a plurality of recess portions 350 arranged on a lateral axis 352 with a central through-hole portion 348, for example.

It is to be noted, that the wing spar structure 310 corresponds mainly with the wing spar structure 210 as shown in Figure 2b. Analogous parts are provided with the same reference numerals as in Figure 2b, but increased by 100 (e.g. spar connection portion 240 corresponds to spar connection portion 340). Further, the wing spar structure 310 is only described in the following insofar as it differs from the wing spar structure of Figure 2b.

For transferring shear forces from the wing spar structure 310 into a fuselage region 324, shear pins 320 are provided. For example, the shear pins 320 may be a bolt secured with a spring or a linkage system. Two shear pins are preferably associated to each wing, one at a leading edge of the wing and the other one at the trailing edge of the wing, such as to efficiently transfer torsion of the wing around the lateral axis as well as a moment around the vertical axis from the wing to the fuselage.

A cross section of the right spar 212 cut along an axis III-III viewed as indicated in Figure 2b is provided in Figure 3. The right spar 212 may be formed with an essentially I-shaped cross section, but could also be formed with an O-shaped cross section (box-spar).

As may be seen, the spar has a web portion 230 elongating in substantially vertical direction. Said web portion 230 assumes a height 234 in vertical direction v and web width 260 in horizontal direction h. The web width 260 may be essentially constant.

Substantially orthogonal to the web portion 230, two spar caps 232 are arranged in an essentially horizontal direction h. The spar caps 232 have a spar cap width 262 in horizontal direction and a thickness 264 in vertical direction. The thickness 264 may increase at the spar connection portion 240. Further, the spar cap width 262 may be scaled with respect to a width of the wing 117 (see Figure 1), but usually the spar cap width 262 is essentially constant. The I-shaped cross section of the spar is symmetrical to a vertical median plane 266, but can have different spar cap cross-sections depending on the loading conditions.

According to this embodiment, the web portion 230 may be arranged essentially in the center of the spar caps 232. However, other embodiments are also feasibly, e.g. a C-shaped cross section, a non-symmetrical I-shape or a rectangular shape.

In the certainly preferred embodiment of the spar 212, 214, the spar caps 232 and the web portion 230 are integrally connected with each other. For manufacturing a spar 212, 214 according to that embodiment, the spar caps 232 are first produced, e.g. by laying a plurality of fiber reinforced layers into a form until the desired spar cap height 264 and spar cap width 262 are achieved. The spar cap 232 is treated for example with a resin material in order to join different layers, to be stabilized and to be protected of environmental influences.

The web portion 230 is manufactured in a similar way. As the web portion 230 is manufactured independently from the spar caps 232, it can assume any form, e.g. an increasing height 234.

Afterwards, the web portion 230 and the spar caps 232 are joined, e.g. via a glue connection and with support of another form or by using a not fully dried, for example dried overnight, resin material as joining material.

After the spars 212, 214 are manufactured, more components are added, e.g. wing membranes, flaps, light system, fuel conduct system if available and the like, until the wing 202a, 202b is fully assembled. The right wing 202a and the left wing 202b are supplied to a fuselage 204 and the at least one spar 212, 214 are introduced into the fuselage 204 at a fuselage region 224. The wings 202a, 202b are connected to the fuselage 204 at the spar connection portion 240.

According to the embodiment of Figure 2b, the right spar 212 and the left spar 214 may have two spar caps 232. Each left spar cap 232b is connected to the respective right spar cap 232a and they form an upper connection portion 240a and a lower spar connection portion 240b, respectively. The upper spar connection portion 240a and the lower spar connection portion 240b may be formed in a similar manner. Nevertheless, it is obvious for those skilled in the art, that the each spar connection portion may be formed in a different manner.

As may be seen from Figure 4, at the spar connection portion 240, the at least one right spar cap 232a of the right spar 212 and the at least one left spar cap 232b of the left spar 214 are connected to each other in an overlapping manner. The right spar cap 232a and the left spar cap 232b are connected via a bolt connection 242.

The bolt connection may comprise a plurality of bolts 244. At least one bolt 244 may be arranged in a substantially vertical direction v, which is substantially parallel to the direction of the web portion 230. The plurality of bolts 242 may be arranged in a symmetrical pattern with respect to the vertical median plane 266 of the right spar 212 and the left spar 214.

With reference to Figures 5a to 6c, variants of a spar connection portion will now be described in more detail.

A spar connection portion 440 according to a first variant is shown in Figure 5a in a cross sectional view according to a line V-V in Figure 4. As shown in Figure 5a, a right spar cap 432a of a right spar 412 and a left spar cap 432b of a left spar 414 are connected with a bolt connection 442, wherein a bolt 444 is arranged in a direction substantially parallel to a web portion 430, i.e. in vertical direction v.

The left spar cap 432b is formed in a U-shape 470, wherein a first leg 472 is above as second leg 474 and the U-shape 470 is open in lateral direction. An opening 476 of the U-shape 470, or fork, is adapted to receive the right spar cap 432a, or a tongue of the right spar 412. Alternatively, the left spar cap 432b may form a tongue and the left spar may form a fork. Further, web portion 430 may have a recess 480 which allows the left and right spar caps 432a, 432b to overlap each other.

Each spar cap 432 may have a thickness 464 which increases towards the spar connection portion 440. A thickness 464a of the spar cap 432a or tongue or right spar 412 may be thicker than a thickness 464b of each of the first and second legs 472, 474. The sum of the thicknesses 464b of the first and second legs 472, 474 may be equal to or larger than a thickness 464c of left spar cap 432b at a distance from the spar connection portion 440.

In a second variant shown in Figure 5b, the U-shape configuration as described for the first variant may be used as well. However, instead of connecting the spar caps by a plurality of bolts as in the first variant, in the second variant, a left spar cap 532b of a left spar 514 may form a single left spar cap loop 582b, and a right spar cap 532a of a right spar 512 may form a single right spar cap loop 582a, respectively. Said spar cap loops 582a, 582b may be manufactured with split layers of a multilayer material and may be integrally formed by the respective spar caps 532a, 532b. A width 562 of the spar caps may be constant as shown in Figure 5b, but may alternatively increase towards the spar connection portion 540.

The spar cap loops 582a, 582b are axially aligned and receive a bolt 544 in vertical direction for connecting the spar caps 532 and forming a bolt connection 542. Bolt 544 may be a threaded bolt engaging a counter thread within one or both spar caps or within a threaded nut. Furthermore, the bolt may comprise a first hollow pin which receives a second pin, such as to have structural redundancy.

Figure 6a shows a third variant of a spar connection portion. Each spar cap 632 is provided with a loop 682. A right spar cap 632a and a left spar cap 632b are connected via the loops 682 with a bolt connection 642 at a connection portion 640. Therefore, the loop 682 of the right spar cap 632a and the loop 682 of the left spar cap 632b are arranged in an aligned, overlapping manner.

At the bolt connection 642 a bolt 644 is arranged, in particular essentially in heading direction h.

A thickness 664 of the right spar cap 632a and the left spar cap 632b may increase towards the spar connection portion 640 such as to secure sufficient material for providing the bolt connection 642.

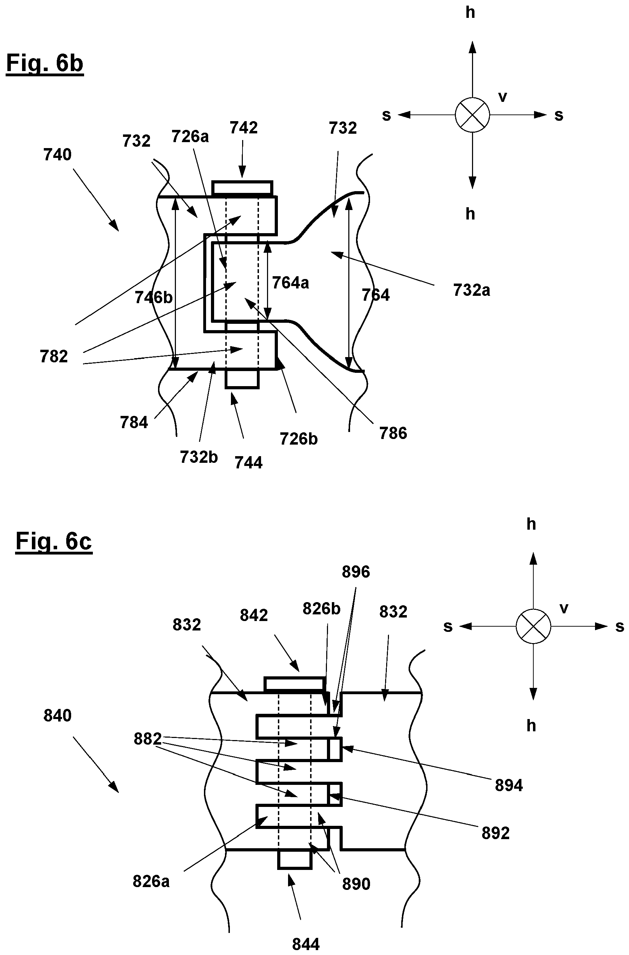

Figure 6b and Figure 6c show different embodiments of a bolt connection 742 and 842, which may both be used for the third variant of the spar connection portion 640 as shown in Figure 6a. Each bolt connection 742, 842 comprises a bolt 744, 844. Said bolt 744, 844 may be arranged in a direction substantially equal to the heading direction h.

According to the embodiment shown in Figure 6b, a spar cap 732b is provided with a clevis 784 at a spar end portion 726b. Said clevis 784 receives a spar end portion 726a of another spar cap 732a, formed as a lug 786. For receiving the bolt 744, each spar cap 732a, 732b is formed with a spar cap loop 782 at the spar end portion 726a, 726b.

A width 764a, 764b in heading direction h of at least one of the spar caps 732 adjacent to a spar connection portion 740 may differ from a width 764 in heading direction h at a distance from the spar connection portion 740. According to the embodiment of Figure 6b, the right spar cap 732a may be tapered towards the spar connection portion 740.

Alternatively, a spar end portion 826a, 826b of each spar cap 832 may be formed in a fork shape comprising a plurality of fork teeth 890 and a plurality of gaps 892 between the fork teeth 890. The gaps 892 may have bottom portions 894 and side portions 896 adapted to the shape of the fork teeth 890 to allow engagement of the fork teeth 890 within the gaps 892.

The spar caps 832 are connected with a bolt 844 extending in heading direction h through axially aligned holes 882 provided in each of the fork teeth 890.

## Claims

1. A wing spar structure (110, 210, 310) for an aircraft (100), comprising
a left wing and a right wing, wherein
a left spar (114, 214, 414, 514, 614) is associated to the left wing (102b, 202b) of the aircraft and a right spar (112, 212, 412, 512, 612) is associated to the right wing (102a, 202a) of the aircraft
wherein each spar (112, 114, 212, 214, 412, 414, 512, 514, 612, 614) has a web portion (230, 430, 630) and at least one spar cap (232, 232a, 232b, 432, 432a, 432b, 532, 532a, 532b, 632, 632a, 632b), wherein in a cross-section orthogonal to the longitudinal axis of the spars, the web portion extends in a substantially vertical direction (v) and the at least one spar cap (232, 232a, 232b, 432, 432a, 432b, 532, 532a, 532b, 632, 632a, 632b) extends in a direction substantially orthogonal to the web portion (230, 430, 630),
wherein the left spar (114, 214, 414, 514, 614) is connected to the right spar (112, 212, 412, 512, 612) by connecting the spar cap (232b, 432b, 532b, 632b) of the left spar to the spar cap (232a, 432a, 532a, 632a) of the right spar at a spar connection portion (140, 240, 240a, 240b, 340, 440, 540, 640),
**characterized in that** the spar cap (232b, 432b, 532b, 632b) of the left spar (114, 214, 414, 514, 614) and the spar cap (232a, 432a, 532a, 632a) of the right spar (112, 212, 412, 512, 612) are directly connected via a bolt connection (242, 442, 542, 642), and in further comprising at least one shear pin adapted to be fixed to a fuselage of the aircraft such as to transmit shear forces from the wing spar structure to the fuselage, said shear pin preferably being fixed to a wing root portion or a root rib attached to the left spar or the right spar.

2. A wing spar structure according to claim 1,
wherein at least one bolt (244, 444, 544, 684) is arranged in a direction substantially parallel to the web portion (230, 430, 630).

3. A wing spar structure according to claim 1 or 2,
wherein the bolt connection (242, 442, 542, 642) comprises a plurality of bolts (244, 444, 544, 684), preferably arranged in a symmetrical pattern to a vertical median plane (266) of the right spar (112, 212, 412, 512, 612) and/or the left spar (114, 214, 414, 514, 614).

4. A wing spar structure according to any of claims 1 to 3,
wherein, in at least one of the left spar and the right spar, a thickness (464,464a, 664, 664a, 664b) of a portion of the spar cap adjacent to the spar connection portion (140, 240, 240a, 240b, 340, 440, 540, 640) is larger, preferably more than 1.5 times larger, than a thickness (464) of a portion of the spar cap at a distance from the spar connection portion.

5. A wing spar structure according to any of claims 1 to 4,
wherein the spar cap (232a, 432a, 532a, 632a) of the right spar (112, 212, 412, 512, 612) or the spar cap (232b, 432b, 532b, 632b) of left spar (114, 214, 414, 514, 614) is formed in a U-shape (470) for receiving the spar cap (232, 232a, 232b, 432, 432a, 432b, 532, 532a, 532b, 632, 632a, 632b) of the respective other spar (112, 114, 212, 214, 412, 414, 512, 514, 612, 614).

6. A wing spar structure according to claim 5,
wherein one leg (472) of the U-shape (470) is arranged above another leg (474) of the U-shape in vertical direction (v).

7. A wing spar structure according to any of claims 1 to 6,
wherein the spar connection portion is formed by a loop connection comprising a loop (582, 582a, 582b, 682) provided on at least one of the spars and a loop engaging structure, for example a pin or a bolt, arranged to pass through the loop.

8. A wing spar structure according to claim 7,
wherein the left and right spars are formed from a fiber material and wherein, at the spar connection portion, fibers of the fiber material extend in a loop shape such as to form the loop (582, 582a, 582b, 682).

9. A wing spar structure according to any of claims 1 to 8,
wherein the web portion (230, 430, 630) of the left spar and the web portion of the right spar have recesses arranges at their ends facing one another such as to jointly form a through hole (248, 348).

10. A wing spar structure according to any of claims 1 to 9,
wherein the web portion (230, 430, 630) is provided with light weight construction measures (350), preferably a recess portion without material.

11. A wing spar structure according to any of claims 1 to 10,
further comprising a second right spar (112a) and a second left spar (114a), wherein the second right and left spars (112a, 114a) are connected to one another by connecting a spar cap (32) of the second left spar to a spar cap of the second right spar at a second spar connection portion (140a).

12. The wing spar structure (110, 210, 310) according to any of claims 1 to 11,
wherein the spar cap (232b) of the left spar (114, 214, 414, 514, 614) is connected to the spar cap (232a) of the right spar (112, 212, 412, 512, 612), when in use, in a fuselage region (124, 224, 324) of the aircraft, at the spar connection portion (140, 240, 240a, 240b, 340, 440, 540, 640),
wherein a height (234) of the web portion (230, 430, 630) in vertical direction (v) increases towards the spar connection portion (140, 240, 240a, 240b, 340, 440, 540, 640).

13. An aircraft comprising a wing spar structure according of at least one of the claims 1 to 12.

## Patentansprüche

1. Flügelholmstruktur (110, 210, 310) für ein Flugzeug (100), umfassend
einen linken Flügel und einen rechten Flügel, wobei
ein linker Holm (114, 214, 414, 514, 614) dem linken Flügel (102b, 202b) des Flugzeugs zugeordnet ist und ein rechter Holm (112, 212, 412, 512, 612) dem rechten Flügel (102b, 202b) des Flugzeugs zugeordnet ist, wobei jeder Holm (112, 114, 212, 214, 412, 414, 512, 514, 612, 614) einen Stegabschnitt (230, 430, 630) und wenigstens eine Holmkappe (232, 232a, 232b, 432, 432a, 432b, 532, 532a, 532b, 632, 632a, 632b) aufweist, wobei in einem zu der longitudinalen Achse der Holme orthogonalen Querschnitt sich der Stegabschnitt in einer im Wesentlichen vertikalen Richtung (v) erstreckt und sich die wenigstens eine Holmkappe (232, 232a, 232b, 432, 432a, 432b, 532, 532a, 532b, 632, 632a, 632b) in einer zu dem Stegabschnitt (230, 430, 630) im Wesentlichen orthogonalen Richtung erstreckt,
wobei der linke Holm (114, 214, 414, 514, 614) durch ein Verbinden der Holmkappe (232b, 432b, 532b, 632b) des linken Holms mit der Holmkappe (232a, 432a, 532a, 632a) des rechten Holms an einem Holmverbindungsabschnitt (140, 240, 240a, 240b, 340, 440, 540, 640) mit dem rechten Holm (112, 212, 412, 512, 612) verbunden ist,
**dadurch gekennzeichnet, dass** die Holmkappe (232b, 432b, 532b, 632b) des linken Holms (114, 214, 414, 514, 614) und die Holmkappe (232a, 432a, 532a, 632a) des rechten Holms (112, 212, 412, 512, 612) über eine Bolzenverbindung (242, 442, 542, 642) direkt verbunden sind, und dass
sie ferner wenigstens einen Scherstift umfasst, welcher dazu eingerichtet ist, an einem Rumpf des Flugzeugs fixiert zu sein, um Scherkräfte von der Flügelholmstruktur auf den Rumpf zu übertragen, wobei der Scherstift vorzugsweise an einem Flügelwurzelabschnitt oder einer an dem linken Holm oder dem rechten Holm angebrachten Wurzelrippe fixiert ist.

2. Flügelholmstruktur nach Anspruch 1,
wobei wenigstens ein Bolzen (244, 444, 544, 684) in einer zu dem Stegabschnitt (230, 430, 630) im Wesentlichen parallelen Richtung angeordnet ist.

3. Flügelholmstruktur nach Anspruch 1 oder 2,
wobei die Bolzenverbindung (242, 442, 542, 642) eine Mehrzahl von Bolzen (244, 444, 544, 684) umfasst, welche vorzugsweise in einem zu einer vertikalen Mittelebene (266) des rechten Holms (112, 212, 412, 512, 612) und/oder des linken Holms (114, 214, 414, 514, 614) symmetrischen Muster angeordnet sind.

4. Flügelholmstruktur nach einem der Ansprüche 1 bis 3,
wobei bei wenigstens einem aus dem linken Holm und dem rechten Holm eine Dicke (464, 464a, 664, 664a, 664b) eines zu dem Holmverbindungsabschnitt (140, 240, 240a, 240b, 340, 440, 540, 640) benachbarten Abschnitts der Holmkappe größer ist, vorzugsweise mehr als 1,5-mal größer ist, als eine Dicke (464) eines Abschnitts der Holmkappe in einem Abstand von dem Holmverbindungsabschnitt.

5. Flügelholmstruktur nach einem der Ansprüche 1 bis 4,
wobei die Holmkappe (232a, 432a, 532a, 632a) des rechten Holms (112, 212, 412, 512, 612) oder die Holmkappe (232b, 432b, 532b, 632b) des linken Holms (114, 214, 414, 514, 614) in einer U-Form (470) gebildet ist, um die Holmkappe (232, 232a, 232b, 432, 432a, 432b, 532, 532a, 532b, 632, 632a, 632b) des jeweiligen anderen Holms (112, 114, 212, 214, 412, 414, 512, 514, 612, 614) aufzunehmen.

6. Flügelholmstruktur nach Anspruch 5,
wobei ein Schenkel (472) der U-Form (470) in der vertikalen Richtung (v) oberhalb eines anderen Schenkels (474) der U-Form angeordnet ist.

7. Flügelholmstruktur nach einem der Ansprüche 1 bis 6,
wobei der Holmverbindungsabschnitt durch eine Schleifenverbindung gebildet ist, welche eine Schleife (582, 582a, 582b, 682), die an wenigstens einem der Holme bereitgestellt ist, und eine Schleifeneingriffsstruktur, zum Beispiel einen Stift oder einen Bolzen umfasst, die dazu eingerichtet ist, die Schleife zu durchsetzen.

8. Flügelholmstruktur nach Anspruch 7,
wobei der linke und der rechte Holm aus einem Fasermaterial gebildet sind und wobei an dem Holmverbindungsabschnitt sich Fasern des Fasermaterials in einer Schleifenform erstrecken, so dass sie die Schleife (582, 582a, 582b, 682) bilden.

9. Flügelholmstruktur nach einem der Ansprüche 1 bis 8,
wobei der Stegabschnitt (230, 430, 630) des linken Holms und der Stegabschnitt des rechten Holms Aussparungen aufweisen, welche an ihren Enden angeordnet sind, die einander zugewandt sind, so dass sie gemeinsam ein Durchgangsloch (248, 348) bilden.

10. Flügelholmstruktur nach einem der Ansprüche 1 bis 9,
wobei der Stegabschnitt (230, 430, 630) mit Leichtbauweisemaßnahmen (350), vorzugsweise einem Aussparungsabschnitt ohne Material, bereitgestellt ist.

11. Flügelholmstruktur nach einem der Ansprüche 1 bis 10,
ferner umfassend einen zweiten rechten Holm (112a) und einen zweiten linken Holm (114a), wobei der zweite rechte und der zweite linke Holm (112a, 114a) durch ein Verbinden einer Holmkappe (32) des zweiten linken Holms mit einer Holmkappe des zweiten rechten Holms an einem zweiten Holmverbindungsabschnitt (140a) miteinander verbunden sind.

12. Flügelholmstruktur (110, 210, 310) nach einem der Ansprüche 1 bis 11,
wobei die Holmkappe (232b) des linken Holms (114, 214, 414, 514, 614) in Verwendung in einem Rumpfbereich (124, 224, 324) des Flugzeugs an dem Holmverbindungsabschnitt (140, 240, 240a, 240b, 340, 440, 540, 640) mit der Holmkappe (232a) des rechten Holms (112, 212, 412, 512, 612) verbunden ist,
wobei eine Höhe (234) des Stegabschnitts (230, 430, 630) in der vertikalen Richtung (v) in Richtung des Holmverbindungsabschnitts (140, 240, 240a, 240b, 340, 440, 540, 640) zunimmt.

13. Flugzeug, umfassend eine Flügelholmstruktur nach wenigstens einem der Ansprüche 1 bis 12.

## Revendications

1. Structure de longeron d'aile (110, 210, 310) pour un avion (100), comprenant une aile gauche et une aile droite, dans laquelle un longeron gauche (114, 214, 414, 514, 614) est associé à l'aile gauche (102b, 202b) de l'avion et un longeron droit (112, 212, 412, 512, 612) est associé à l'aile droite (102a, 202a) de l'avion,
dans laquelle chaque longeron (112, 114, 212, 214, 412, 414, 512, 514, 612, 614) a une partie âme (230, 430, 630) et au moins une semelle de longeron (232, 232a, 232b, 432, 432a, 432b, 532, 532a, 532b, 632, 632a, 632b), dans laquelle, dans une section transversale orthogonale à l'axe longitudinal des longerons, la partie âme s'étend dans une direction sensiblement verticale (V) et la au moins une semelle de longeron (232, 232a, 232b, 432, 432a, 432b, 532, 532a, 532b, 632, 632a, 632b) s'étend dans une direction sensiblement orthogonale à la partie âme (230, 430, 830),
dans laquelle le longeron gauche (114, 214, 414, 514, 614) est relié au longeron droit (112, 212, 412, 512, 612) par liaison de la semelle de longeron (232b, 432b, 532b, 632b) du longeron gauche à la semelle de longeron (232a, 432a, 532a, 632a) du longeron droit au niveau d'une partie de liaison de longerons (140, 240, 240a, 240b, 340, 440, 540, 640),
**caractérisée en ce que** la semelle de longeron (232b, 432b, 532b, 632b) du longeron gauche (114, 214, 414, 514, 614) et la semelle de longeron (232a, 432a, 532a, 632a) du longeron droit (112, 212, 412, 512, 612) sont reliées directement via une liaison par boulons (242, 442, 542, 642), et **en ce qu'**elle comprend en outre au moins une broche de cisaillement adaptée pour être fixée à un fuselage de l'avion de manière à transmettre les forces de cisaillement de la structure de longeron d'aile au fuselage, ladite broche de cisaillement étant de préférence fixée à une partie d'emplanture d'aile ou à une nervure d'emplanture fixée au longeron gauche ou au longeron droit.

2. Structure de longeron d'aile selon la revendication 1,
dans laquelle au moins un boulon (244, 444, 544, 684) est disposé dans une direction sensiblement parallèle à la partie âme (230, 430, 630).

3. Structure de longeron d'aile selon la revendication 1 ou 2,
dans laquelle la liaison par boulons (242, 442, 542, 642) comprend une pluralité de boulons (244, 444, 544, 684), disposés de préférence selon un motif symétrique par rapport à un plan médian vertical (266) du longeron droit (112, 212, 412, 512, 612) et/ou du longeron gauche (114, 214, 414, 514, 614).

4. Structure de longeron d'aile selon l'une quelconque des revendications 1 à 3,
dans laquelle, dans au moins l'un parmi le longeron gauche et le longeron droit, une épaisseur (464, 464a, 664, 664a, 664b) d'une partie de la semelle de longeron adjacente à la partie de liaison de longerons (140, 240, 240a, 240b, 340, 440, 540, 640) est plus grande, de préférence plus de 1,5 fois plus grande, qu'une épaisseur (464) d'une partie de la semelle de longeron à une distance de la partie de liaison de longerons.

5. Structure de longeron d'aile selon l'une quelconque des revendications 1 à 4,
dans laquelle la semelle de longeron (232a, 432a, 532a, 632a) du longeron droit (112, 212, 412, 512, 612) ou la semelle de longeron (232b, 432b, 532b, 632b) du longeron gauche (114, 214, 414, 514, 614) est formée en une forme en U (470) pour recevoir la semelle de longeron (232, 232a, 232b, 432, 432a, 432b, 532, 532a, 532b, 632, 632a, 632b) de l'autre longeron respectif (112, 114, 212, 214, 412, 414, 512, 514, 612, 614).

6. Structure de longeron d'aile selon la revendication 5,
dans laquelle une branche (472) de la forme en U (470) est disposée au-dessus d'une autre branche (474) de la forme en U dans la direction verticale (v).

7. Structure de longeron d'aile selon l'une quelconque des revendications 1 à 6,
dans laquelle la partie de liaison de longerons est formée par une liaison en boucle comprenant une boucle (582, 582a, 582b, 682) disposée sur au moins l'un des longerons et une structure d'engagement de boucle, par exemple une broche ou un boulon, disposée pour traverser la boucle.

8. Structure de longeron d'aile selon la revendication 7,
dans laquelle les longerons gauche et droit sont formés à partir d'un matériau fibreux et dans laquelle, au niveau de la partie de liaison de longerons, les fibres du matériau fibreux s'étendent en forme de boucle de manière à former la boucle (582, 582a, 582b, 682).

9. Structure de longeron d'aile selon l'une quelconque des revendications 1 à 8,
dans laquelle la partie âme (230, 430, 630) du longeron gauche et la partie âme du longeron droit ont des évidements disposés à leurs extrémités tournées l'une vers l'autre de manière à former conjointement un trou traversant (248, 348).

10. Structure de longeron d'aile selon l'une quelconque des revendications 1 à 9,
dans laquelle la partie âme (230, 430, 630) est munie de mesures de construction légères (350), de préférence une partie évidée sans matériau.

11. Structure de longeron d'aile selon l'une quelconque des revendications 1 à 10,
comprenant en outre un deuxième longeron droit (112a) et un deuxième longeron gauche (114a), dans laquelle les deuxièmes longerons droit et gauche (112a, 114a) sont reliés l'un à l'autre par liaison d'une semelle de longeron (32) du deuxième longeron gauche à une semelle de longeron du deuxième longeron droit au niveau d'une deuxième partie de liaison de longerons (140a).

12. Structure de longeron d'aile (110, 210, 310) selon l'une quelconque des revendications 1 à 11,
dans laquelle la semelle de longeron (232b) du longeron gauche (114, 214, 414, 514, 614) est reliée à la semelle de longeron (232a) du longeron droit (112, 212, 412, 512, 612), lorsqu'ils sont utilisés, dans une région de fuselage (124, 224, 324) de l'avion, au niveau de la partie de liaison de longerons (140, 240, 240a, 240b, 340, 440, 540, 640),
dans laquelle une hauteur (234) de la partie âme (230, 430, 630) dans la direction verticale (v) augmente vers la partie de liaison de longerons (140, 240, 240a, 240b, 340, 440, 540, 640).

13. Avion comprenant une structure de longeron d'aile selon au moins l'une des revendications 1 à 12.
